# EUROPEAN PATENT SPECIFICATION

(11) **EP 3 020 606 B1**
(45) Date of publication and mention of the grant of the patent: **03.01.2018**
(21) Application number: 14193349.9
(22) Date of filing: 14.11.2014
(51) Int. Cl.: B60R 13/02, B60N 2/58, B60N 2/60, D05B 93/00

(54) **VEHICULE INTERIOR COMPONENT COMPRISING STITCHING PATTERN**
FAHRZEUGINNENRAUM-BAUELEMENT MIT NÄHMUSTER
COMPOSANT INTÉRIEUR DE VÉHICULE COMPRENANT UN MOTIF DE PIQUAGE

(43) Date of publication of application: 18.05.2016
(73) Proprietor: Faurecia Innenraum Systeme GmbH, 76767 Hagenbach (DE)
(72) Inventor: Koch, Lisa, 76185 Karlsruhe (DE)
(74) Representative: Cabinet Plasseraud

(56) References cited:
- EP-A1- 2 283 749
- EP-A1- 2 703 154
- US-A- 1 822 799
- US-A- 2 595 152
- US-A1- 2013 260 086

## Description

### FIELD OF THE INVENTION

The present invention relates to a vehicle interior component comprising stitching pattern.

### BACKGROUND OF THE INVENTION

Stitches (seams) forming patterns are known in the art. For example, DIN standard N°61400, or ISO standard N°4915:1991, both relating to "Textiles - Stitch types - Classification and terminology", contain many well recognized stitching patterns. Classical examples of stitches are the so-called zigzag stitch and cross stitch. The stitches known as zigzag stitch, cross stitch and the like are characterized in that they can form patterns using small lines or crosses, respectively, formed by the needle thread. These lines or crosses have to have a certain minimal dimensions in order not to damage or disengage from the material (cloth) on which they are applied.

More precisely, the invention concerns a vehicle interior component comprising:
- a support layer comprising an inner surface and an outer surface defining a thickness, and
- a stitching applied to the support layer, wherein the stitching comprises:
   - a pattern thread and
   - a support thread, the support thread being positioned on the outer surface of the support layer,
   and wherein the pattern thread forms loops with the support thread on the outer surface of the support layer and goes through the thickness of the support layer and extends on the inner surface between said loops.

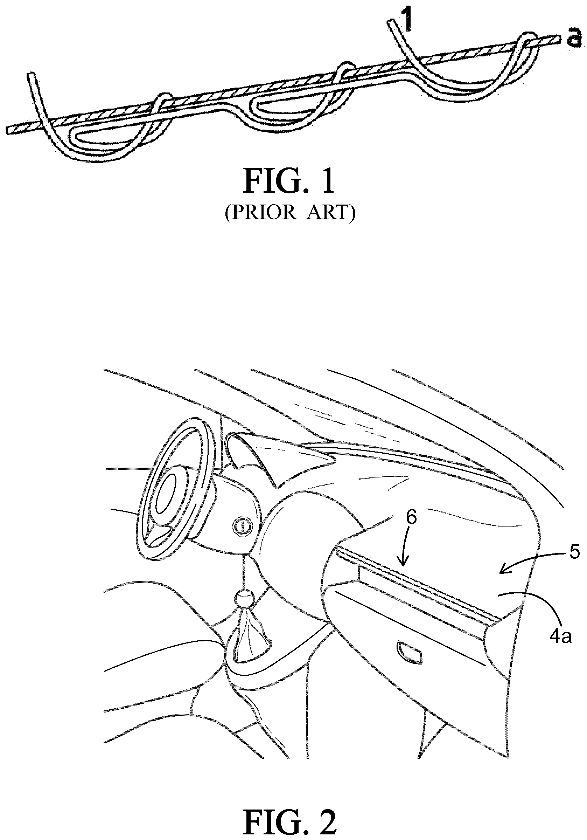

One particular example of such stitch is pattern 317 of DIN standard N°61400, shown on Fig 1.

The stitching pattern of Fig 1 provides a single line of stitching with bead-like features created by the pattern thread. Such a single line stitching pattern has been applied on vehicle for a decorative purpose.

Another example of prior art stitches can be found also e.g. in EP 2 703 154 (which discloses a lockstitch using two yarns) that corresponds to the preamble of claim 1 and in US 1 822 799.

However, it is desired to increase the visual effect of that kind of stitching, notably by providing two, or more, lines with rows of beads-like features formed by the loops.

One could have though that it can be obtained by repeating the stitching of Fig 1 for a second time along a second line which would be parallel to the first line and/or would have a pattern compatible with the first line. However the inventor detected that that simple solution raises problems. If fact, there is a risk of the lines not being parallel. More troublesome, the repeatability of the alignment, or offset, of the bead-like features created by the loops on each of the support threads is very difficult to obtain. A slight misalignment affects drastically the visual aspect leading to a rejection of the part for a perceived quality defect. Consequently, there is a need for a technical solution enabling the manufacture of two or more lines of stitches of the aforementioned type in industrial manner, notably with a scraps rate acceptable by the automotive industry.

### OBJECTS AND SUMMARY OF THE INVENTION

One purpose of the present invention is to avoid these drawbacks.

To this aim, a vehicle interior component having the features of claim 1 is provided. With these features, one can get a pattern stitching which is in two parallel lines, or, more generally, in two lines which keep a predefined distance.

The offset between the loops of the respective first and second support threads is remarkably constant. This is supposed to be due to the simultaneous start of the stitching of the two lines. It is also certainly due to the fact that the variations of tension on the threads that might occur during the stitching, affect the both lines of stitches. Thus if the gap between the loops around the first support threat vary slightly, a similar variation appears between the loops around the second support thread and there is no visible variation of the offset between the loops of the first and second lines of stitches.

Additionally the process of manufacture of the component is less time consuming, and consequently less expensive.

In some embodiments, one might also use one or more of the following features:
- a first and a second pattern threads are provided, and the first and second pattern threads form a plurality of loops, wherein each loop is formed by the respective pattern thread penetrating the support layer from the inner surface to the outer surface, crossing a first or a second support thread, respectively, and penetrating the support layer from the outer surface to the inner surface, and wherein between neighbouring loops the first and second pattern threads run across each other;
- for each loop of each of the pattern threads, said pattern thread penetrates the support layer from the inner surface of the support layer, forms said loop with one of the support threads in a tight manner, and penetrates the support layer from the outer surface), and the only visible parts of the pattern threads on the outer surface of the support layer are the loops which have a bead-like appearance;

- the pattern threads cross each other on the inner surface of the support layer, between said loops;
- the support threads are of the same or similar colour to the colour of the outer surface of the support layer and wherein at least one of the pattern threads comprises a colour with high contrast to the colour of the support threads and/or the outer surface of the support layer;
- a set of at least three successive pattern thread loops around one of the first and second support threads has predetermined gap distances between each of said successive pattern thread loops, and wherein at least two of said gap distances are significantly different;
- the predetermined gap distances of a set of at least three successive pattern thread loops create a predetermined motif of loops, said motif of loops being repeated successively along said one of the first and second support threads;
- both of the first and second support threads show a predetermined motif of loops, said motifs of loops being different with respect to the first and second support threads;
- one of the pattern threads is of a colour of high contrast with respect of the colour of the other pattern thread;
- the support threads are parallel;
- at least one of the support threads (3a, 3b) is a piping.

### BRIEF DESCRIPTION OF THE DRAWINGS

Other characteristics and advantages of the invention will readily appear from the following description of one of its embodiments, provided as non-limitative examples, and of the accompanying drawings.

On the drawings:
- Figure 1 shows a stitch of the prior art, corresponding to pattern 317 of DIN standard N°61400,
- Figure 2 shows an example of a vehicle interior component with one embodiment of the stitching pattern according to the invention
- Figures 3 and 4 show perspective views of a vehicle interior component having a support layer provided with a stitching according to one embodiment of the invention, viewed respectively from the top and bottom,
- Figure 5 is a perspective view showing the stitching of Figures 3-4 alone,
- Figure 6 is a view similar to Figure 5, showing the stitching and the support layer,
- Figure 7 shows schematically the pattern on the outside surface of the support layer, in the embodiment of Figures 1-6,
- and Figure 8 shows schematically the pattern on the outside surface of the support layer, in another embodiment of the invention.

On the different Figures, the same reference signs designate like or similar elements.

### DETAILED DESCRIPTION

Figure 2 shows a vehicle interior component 5 with a stitching pattern 6. The vehicle interior component 5 may be for instance a dashboard, a console, a console box, a seat, a door panel, a steering wheel, a gear knob or the like. In the example of Fig 2, the vehicle interior component 5 is a dashboard box decorated with the stitching pattern 6, but the application of the stitching pattern is not limited thereto.

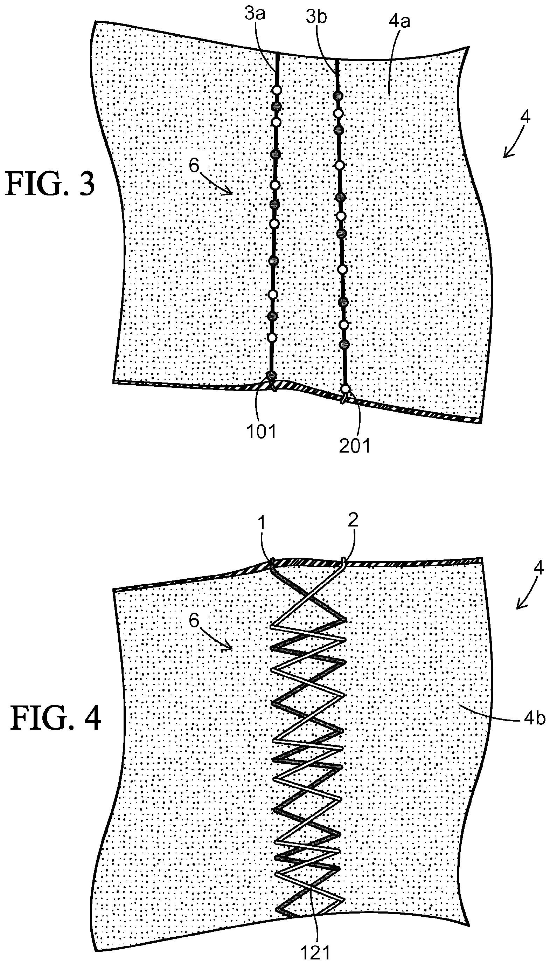

Figs 3 and 4 show a detail of the applied stitching pattern 6. The stitching pattern 6 may be applied on any suitable support layer 4 which forms an outer surface of the vehicle interior component, such as automotive upholstery; particularly suitable support layers are formed by textile, leather, or plastics materials.

The support layer 4 onto which the stitching is applied comprises an inner surface 4b, which is normally not visible to the user, and an outer surface 4a, which is visible to the user. The inner surface 4b and the outer surface 4a are separated by a thickness T of support layer 4.

The stitching according to the embodiments described uses two pattern threads 1, 2, and two support threads 3a, 3b. Each of these threads may be of any suitable material such as plastic, metal, wool, cotton, leather and the like, and of any suitable thickness. In one possible embodiment, the support threads 3a, 3b are formed of piping, for instance made of plastic or other material.

The support threads 3a, 3b are positioned generally on the outer surface 4a of the support layer 4 and extent longitudinally in the direction of the stitching pattern 6. The support threads 3a, 3b do not penetrate the support layer 4. The support threads 3a, 3b may be parallel, or, more generally, the distance between the support threads 3a, 3b may be constant along at least portions of the support threads 3a, 3b. Alternatively, the distance between the threads may change in a pre-defined pattern, to form for example a diamond-like pattern.

The pattern threads 1, 2 form bead-like features by engaging and forming loops 101, 202, 103, 204, 105, 201 with the support threads 3a, 3b. The width of the gap separating two successive loops 101, 202, 103, 204, 105, 201 may be constant.

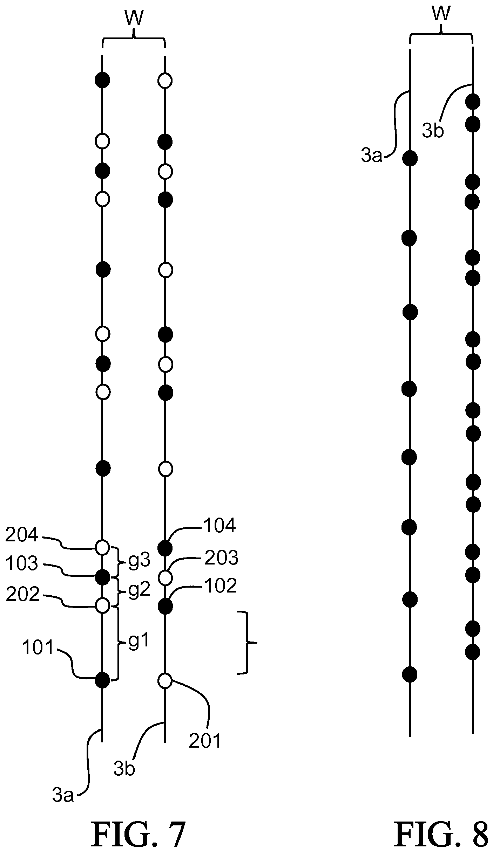

Preferably, as visible on Fig 7, this gap distance g1, g2, g3 between the loops 101, 202, 103, 204 vary in a predefined way, thus forming a decorative pattern, or motif with groups of closely-positioned loops, possibly separated by an empty space or a single loop or a group with lesser number of loops. In this way, a bead-like motif is formed by the loops 101, 202, 103, 204, 201, 102, 203, 104 on the outer surface 4a of the support layer 4. Examples of such patterns are shown schematically on Figs 7-8. In the embodiment of Fig 7, the loops form groups of three bead-like features 202, 103, 204 spaced apart with a single one 101 between the groups on the first support thread 3a. Similar groups of bead-like features 201, 102, 203, 104 are formed on the second support thread 3b in alignment (i.e. with a null offset) with those of the first support thread. In the embodiment of Fig 8, the loops form regularly spaced bead-like features on the first support thread 3a, and are arranged in pairs on the second support thread 3b, the single bead-like features and pairs thereof being offset, i.e. the single bead-like features on support thread 3a being in alignment with the middle of the gap between two pairs of the bead-like features on support thread 3b.

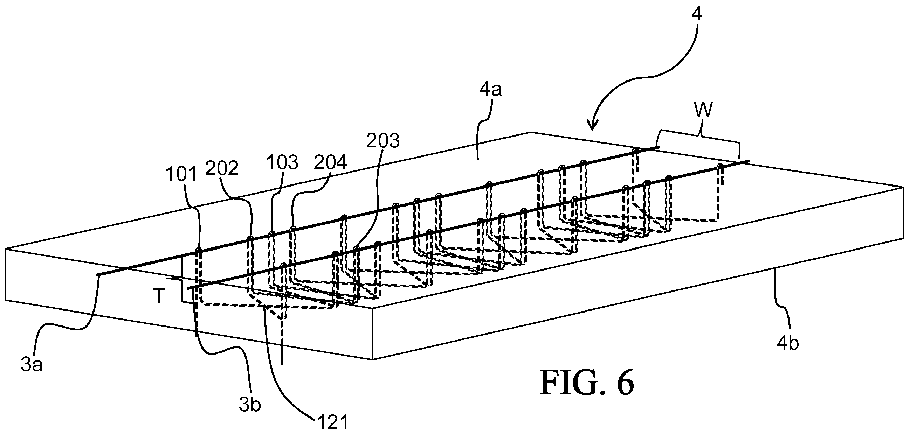

An example of stitching according to the present invention is shown on Figs 3-6. In the proximity of the first support thread 3a, in a predefined point where a bead-like stitch is required, a first pattern thread 1 penetrates the support layer 4 from the inner surface 4b towards the outer surface 4a, forms a loop 101 around the first support thread 3a, and penetrates the support layer 4 from the outer surface 4a towards the inner surface 4b. Similarly, second pattern thread 2 penetrates the support layer 4 from the inner surface 4b towards the outer surface 4a, forms a loop 201 around the second support thread 3b, and penetrates the support layer 4 from the outer surface 4a towards the inner surface 4b. Next, the first pattern thread 1 extends along the inner surface 4b of the support layer 4 towards the second support thread 3b. The first angle between the first pattern thread 1 and the first support thread is less than 90 degrees (for example 45 degrees). The second pattern thread 2 extends similarly towards the first support thread 3a. The first and second pattern threads 1, 2 cross each other at a crossing 121, positioned in the middle of the distance W between the first and second support threads 3a, 3b. The first pattern thread 1 continues towards the second support thread 3b, and in close proximity thereof penetrates the support layer 4 from the inner surface 4b towards the outer surface 4a, forms a loop 102 around the second support thread 3b, and penetrates the support layer 4 from the outer surface 4a towards the inner surface 4b. Similarly, the second pattern thread 2 forms a loop 202 around the first support thread 3a. The threads 1, 2 then extend along the inner surface 4b towards the first and second support thread 3a, 3b, respectively. The pattern threads 1, 2 may extend in a second angle different from the first angle, thus adjusting the distance between the loops 101 and 202 and between the loops 201 and 102, respectively. On the inner surface 4b, the pattern threads 1, 2 form a cross pattern (i.e. the pattern threads cross each other).

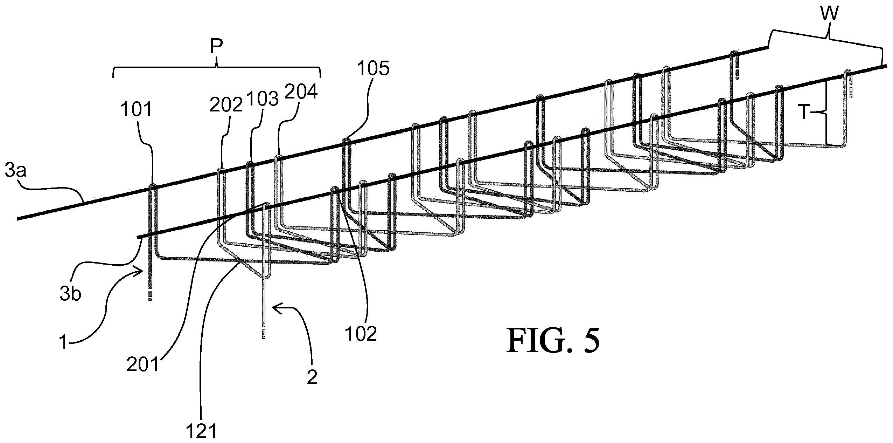

For example, the distance between the loops 101 and 202 may be bigger than the distance between the next three loops, i.e. between loops 202 and 103 and between the loops 103 and 204. The distance between the loop 204 and the next loop 105 may be again bigger, e.g. the same as between the loops 101 and 202. This creates a decorative motif as explain with reference to Figs 7 and 8, which is repeated with a certain periodicity P along the support threads 3a, 3b as indicated on Fig 5.

In this embodiment the loops 101, 202, 103, 204 are closely tightened around the support threads 3a, 3b so that they look like beads or pearls strung on these threads, the penetration of the pattern threads 1, 2 into the layer 4 being not directly visible.

One could also note that the decorative effect of the pattern stitching 6 can also be obtained with a single pattern thread passing from the first support thread 3a to the second support thread 3b, and then reciprocally from the second support thread 3b to the first support thread 3a.

The decorative stitching as described above uses two pattern threads 1, 2 which cross from the first support thread 3a to the second support thread 3b on the inner surface 4b of the continuous support layer 4 with a flat outer surface 4a on the represented embodiments. However the outer surface may have a groove or fake seam. The support threads 3a, 3b can be arranged on each side of such a fake seam, or arranged on the same side in two close parallel lines for a more original visual appearance. In case the stitching is formed along a seam separating the support layer, or along overlapping support layers the decorative stitching has also a fixation function and may serve as reinforcement for the seam, thus helping to connect and hold two stitched parts together.

By selecting an appropriate material and colour of the pattern threads 1, 2 and the support threads 3a, 3b, and by adjusting the distances between the loops 101, 202, 103, 204, interesting optical effects may be achieved. For example, the support threads 3a, 3b may be chosen in the same or similar colour as the outer surface 4a of the support layer 4 (e.g. black, brown or grey), while the threads 1, 2 may comprise a high contrast colour (e.g. silver, white, yellow, fuchsia etc.). In certain embodiments, the pattern threads 1, 2 may have different colours, or be multi-coloured. Alternatively, the support threads 3a, 3b may also have bright and/or contrast colours; up to four different colours may be used.

The colour combination is preferably designed so as to attract the user's attention and provide interesting optical effects. For example, with the support threads 3a, 3b and the support layer 4 having the same colour of dark grey, and with the threads 1, 2 being fluorescent yellow and lime, respectively, high contrast is achieved and due to certain similarity of the colours of the threads 1, 2, interesting optical effect is present.

## Claims

1. A vehicle interior component (5) comprising
- a support layer (4) comprising an inner surface (4b) and an outer surface (4a), and
- a stitching (6) applied to the support layer (4), wherein the stitching comprises:
• at least one pattern thread (1; 2) and
• at least two support threads (3a, 3b), the support threads (3a, 3b) being positioned on the outer surface (4a) of the support layer (4), **characterized in that** the support threads (3a, 3b) do not penetrate the support layer (4) and the at least one pattern thread (1; 2) alternately engages a first support thread (3a) and a second support thread (3b) to form loops with the respective support thread on the outer surface (4a) of the support layer (4), said at least one pattern thread (1; 2) going through the thickness of the support layer (4) and extending on the inner surface (4b) between said loops.

2. Vehicle interior component as in claim 1, wherein a first and a second pattern threads (1, 2) are provided, and wherein said first and second pattern threads (1, 2) form a plurality of loops, wherein each loop is formed by the respective pattern thread penetrating the support layer (4) from the inner surface (4b) to the outer surface (4a), crossing a first or a second support thread (3a, 3b), respectively, and penetrating the support layer (4) from the outer surface (4a) to the inner surface (4b), and wherein between neighbouring loops the first and second pattern threads (1, 2) run across each other.

3. Vehicle interior component as in claim 2, wherein for each loop of each of the pattern threads (1, 2), said pattern thread penetrates the support layer (4) from the inner surface (4b) of the support layer (4), forms said loop with one of the support threads (3a, 3b) in a tight manner, and penetrates the support layer (4) from the outer surface (4a), and wherein the only visible parts of the pattern threads (1, 2) on the outer surface (4a) of the support layer (4) are the loops which have a bead-like appearance.

4. Vehicle interior component as in claim 2 or 3, wherein the pattern threads (1, 2) cross each other on the inner surface (4b) of the support layer (4), between said loops.

5. Vehicle interior component as in any of the claims 2-4, wherein the support threads (3a, 3b) are of the same or similar colour to the colour of the outer surface (4a) of the support layer (4) and wherein at least one of the pattern threads (1, 2) comprises a colour with high contrast to the colour of the support threads (3a, 3b) and/or the outer surface (4a) of the support layer (4).

6. Vehicle interior component as in any of the claims 2-5, wherein a set of at least three successive pattern thread loops (101, 202, 103, 204) around one of the first and second support threads (3a, 3b) has predetermined gap widths (g1, g2, g3) between each of said successive pattern thread loops, and wherein at least two of said gap widths are significantly different.

7. Vehicle interior component as in claim 6, wherein the predetermined gap widths (g1, g2, g3) of a set of at least three successive pattern thread loops (101, 202, 103, 204) create a predetermined motif of loops, said motif of loops being repeated successively along said one of the first and second support threads (3a, 3b).

8. Vehicle interior component as in claim 7, wherein both of the first and second support threads (3a, 3b) show a predetermined motif of loops, said motifs of loops being different with respect to the first and second support threads (3a, 3b).

9. Vehicle interior component as in any of the claims 2-4, wherein one of the first and second pattern threads (1;2) is of a colour of high contrast as compared to the colour of the other pattern thread (2;1).

10. Vehicle interior component as in any of the preceding claims, wherein the first and second support threads (3a, 3b) are parallel.

11. Vehicle interior component as in any of the preceding claims, wherein at least one of the first and second support threads (3a, 3b) is a piping.

## Patentansprüche

1. Fahrzeuginnenraum-Bauelement (5), umfassend:
- eine Stützschicht (4), die eine Innenfläche (4b) und eine Außenfläche (4a) umfasst, und
- eine Naht (6), die an der Stützschicht (4) angebracht wird, wobei die Naht Folgendes umfasst:
- mindestens einen Musterfaden (1; 2) und
- mindestens zwei Stützfäden (3a, 3b), wobei die Stützfäden (3a, 3b) an der Außenfläche (4a) der Stützschicht (4) positioniert sind,
**dadurch gekennzeichnet, dass** die Stützfäden (3a, 3b) die Stützschicht (4) nicht durchdringen und der mindestens eine Musterfaden (1; 2) abwechselnd einen ersten Stützfaden (3a) und einen zweiten Stützfaden (3b) in Eingriff nimmt, um mit dem jeweiligen Stützfaden Schlaufen auf der Außenfläche (4a) der Stützschicht (4) zu bilden, wobei der mindestens eine Musterfaden (1; 2) durch die Dicke der Stützschicht (4) verläuft und sich auf der Innenfläche (4b) zwischen den Schlaufen erstreckt.

2. Fahrzeuginnenraum-Bauelement nach Anspruch 1, wobei ein erster und ein zweiter Musterfaden (1; 2) vorgesehen sind und wobei der erste und der zweite Musterfaden (1; 2) mehrere Schlaufen bilden, wobei jede Schlaufe durch den jeweiligen Musterfaden gebildet wird, der die Stützschicht (4) von der Innenfläche (4b) zur Außenfläche (4a) durchdringt, einen ersten bzw. einen zweiten Stützfaden (3a, 3b) überkreuzt und die Stützschicht (4) von der Außenfläche (4a) zur Innenfläche (4b) durchdringt, und wobei der erste und der zweite Musterfaden (1; 2) zwischen benachbarten Schlaufen übereinander verlaufen.

3. Fahrzeuginnenraum-Bauelement nach Anspruch 2, wobei der Musterfaden für jede Schlaufe jedes der Musterfäden (1; 2), das die Stützschicht (4) von der Innenfläche (4b) der Stützschicht (4) durchdringt, die Schlaufe mit einem der Stützfäden (3a, 3b) straff bildet und die Stützschicht (4) von der Außenfläche (4a) durchdringt und wobei die einzig sichtbaren Teile der Musterfäden (1; 2) auf der Außenfläche (4a) der Stützschicht (4) die Schlaufen sind, die perlenförmig aussehen.

4. Fahrzeuginnenraum-Bauelement nach Anspruch 2 oder 3, wobei sich die Musterfäden (1; 2) auf der Innenfläche (4b) der Stützschicht (4) zwischen den Schlaufen überkreuzen.

5. Fahrzeuginnenraum-Bauelement nach einem der Ansprüche 2 - 4, wobei die Stützfäden (3a, 3b) von gleicher oder ähnlicher Farbe sind, wie die Farbe der Außenfläche (4a) der Stützschicht (4) und wobei mindestens einer der Musterfäden (1; 2) eine Farbe mit einem starken Kontrast zu der Farbe der Stützfäden (3a, 3b) und/oder der Außenfläche (4a) der Stützschicht (4) aufweist.

6. Fahrzeuginnenraum-Bauelement nach einem der Ansprüche 2 - 5, wobei ein Satz von mindestens drei aufeinanderfolgenden Musterfadenschlaufen (101, 202, 103, 204) um einen der ersten und zweiten Stützfäden (3a, 3b) herum vorbestimmte Spaltbreiten (g1, g2, g3) zwischen jeder der aufeinanderfolgenden Musterfadenschlaufen aufweist und wobei mindestens zwei der Spaltbreiten deutlich verschieden sind.

7. Fahrzeuginnenraum-Bauelement nach Anspruch 6, wobei die vorbestimmten Spaltbreiten (g1, g2, g3) eines Satzes von mindestens drei aufeinanderfolgenden Musterfadenschlaufen (101, 202, 103, 204) ein vorbestimmtes Motiv von Schlaufen bilden, wobei das Motiv von Schlaufen entlang dem einen des ersten und zweiten Stützfadens (3a, 3b) nacheinander wiederholt wird.

8. Fahrzeuginnenraum-Bauelement nach Anspruch 7, wobei sowohl der erste als auch der zweite Stützfaden (3a, 3b) ein vorbestimmtes Motiv von Schlaufen aufweisen, wobei die Motive von Schlaufen bezüglich des ersten und zweiten Stützfadens (3a, 3b) verschieden sind.

9. Fahrzeuginnenraum-Bauelement nach einem der Ansprüche 2 - 4, wobei einer des ersten und zweiten Musterfadens (1; 2) von einer Farbe ist, die bezüglich der Farbe des anderen Musterfadens (1; 2) einen starken Kontrast aufweist.

10. Fahrzeuginnenraum-Bauelement nach einem der vorhergehenden Ansprüche, wobei der erste und der zweite Stützfaden (3a, 3b) parallel verlaufen.

11. Fahrzeuginnenraum-Bauelement nach einem der Ansprüche, wobei mindestens einer des ersten und zweiten Stützfadens (3a, 3b) eine Paspel ist.

## Revendications

1. Composant intérieur de véhicule (5) comprenant
- une couche de support (4) comprenant une surface intérieure (4b) et une surface extérieure (4a), et
- une piqûre (6) appliquée à la couche de support (4), dans lequel la piqûre comprend :
-- au moins un fil de motif (1 ; 2) et
-- au moins deux fils de support (3a, 3b), les fils de support (3a, 3b) étant positionnés sur la surface extérieure (4a) de la couche de support (4),
**caractérisé en ce que** les fils de support (3a, 3b) ne pénètrent pas dans la couche de support (4) et l'au moins un fil de motif (1 ; 2) met en prise en alternance un premier fil de support (3a) et un second fil de support (3b) pour former des boucles avec le fil de support respectif sur la surface extérieure (4a) de la couche de support (4), ledit au moins un fil de motif (1 ; 2) traversant l'épaisseur de la couche de support (4) et s'étendant sur la surface intérieure (4b) entre lesdites boucles.

2. Composant intérieur de véhicule selon la revendication 1, dans lequel un premier et un second fil de motif (1, 2) sont prévus, et dans lequel lesdits premier et second fils de motif (1, 2) forment une pluralité de boucles, dans lequel chaque boucle est formée par le fil de motif respectif pénétrant dans la couche de support (4) de la surface intérieure (4b) à la surface extérieure (4a), croisant un premier ou un second fil de support (3a, 3b) respectivement, et pénétrant dans la couche de support (4) de la surface extérieure (4a) à la surface intérieure (4b), et dans lequel entre des boucles contiguës les premier et second fils de motif (1, 2) se croisent l'un l'autre.

3. Composant intérieur de véhicule selon la revendication 2, dans lequel pour chaque boucle de chacun des fils de motif (1, 2), ledit fil de motif pénètre dans la couche de support (4) de la surface intérieure (4b) de la couche de support (4), forme ladite boucle avec un des fils de support (3a, 3b) de manière serrée, et pénètre dans la couche de support (4) de la surface extérieure (4a), et dans lequel les seules parties visibles des fils de motif (1, 2) sur la surface extérieure (4a) de la couche de support (4) sont les boucles qui possèdent une apparence de type cordon.

4. Composant intérieur de véhicule selon la revendication 2 ou 3, dans lequel les fils de motif (1, 2) se croisent l'un l'autre sur la surface intérieure (4b) de la couche de support (4), entre lesdites boucles.

5. Composant intérieur de véhicule selon l'une quelconque des revendications 2 à 4, dans lequel les fils de support (3a, 3b) sont de la même couleur ou de couleur similaire à la couleur de la surface extérieure (4a) de la couche de support (4) et dans lequel au moins un des fils de motif (1, 2) comprend une couleur avec un contraste élevé par rapport à la couleur des fils de support (3a, 3b) et/ou la surface extérieure (4a) de la couche de support (4).

6. Composant intérieur de véhicule selon l'une quelconque des revendications 2 à 5, dans lequel un ensemble d'au moins trois boucles de fils de motif successives (101, 202, 103, 204) autour d'un des premier et second fils de support (3a, 3b) présente des largeurs de fente prédéterminées (g1, g2, g3) entre chacune desdites boucles de fils de motif successives, et dans lequel au moins deux desdites largeurs de fente sont significativement différentes.

7. Composant intérieur de véhicule selon la revendication 6, dans lequel les largeurs de fente prédéterminées (g1, g2, g3) d'un ensemble d'au moins trois boucles de fils de motif successives (101, 202, 103, 204) créent un motif prédéterminé de boucles, ledit motif de boucles étant répété successivement le long dudit un des premier et second fils de support (3a, 3b).

8. Composant intérieur de véhicule selon la revendication 7, dans lequel les deux des premier et second fils de support (3a, 3b) représentent un motif prédéterminé de boucles, lesdits motifs de boucles étant différents par rapport aux premier et second fils de support (3a, 3b).

9. Composant intérieur de véhicule selon l'une quelconque des revendications 2 à 4, dans lequel un des premier et second fils de motif (1 ; 2) présente une couleur à contraste élevé par rapport à la couleur de l'autre fil de motif (2 ; 1).

10. Composant intérieur de véhicule selon l'une quelconque des revendications précédentes, dans lequel les premier et second fils de support (3a, 3b) sont parallèles.

11. Composant intérieur de véhicule selon l'une quelconque des revendications précédentes, dans lequel au moins un des premier et second fils de support (3a, 3b) est un passepoil.
